# EUROPÄISCHE PATENTANMELDUNG

(11) **EP 4 174 212 A1**
(43) Veröffentlichungstag der Anmeldung: **03.05.2023**
(21) Anmeldenummer: 22203973.7
(22) Anmeldetag: 26.10.2022
(51) Int. Cl.: C23C 24/08, C23C 24/10, C23C 28/00, C23C 30/00, F16D 65/00

(54) **VERFAHREN ZUR HERSTELLUNG EINER BREMSSCHEIBE UND BREMSSCHEIBE**

(30) Priorität: 29.10.2021 DE 102021128374
(71) Anmelder: IMPACT-Innovations-GmbH, 84431 Haun/Rattenkirchen (DE)
(72) Erfinder: GROPP, Andreas, 83527 Kirchdorf (DE); RICHTER, Peter, 84431 Heldenstein (DE); HOLZGASSNER, Leonhard, 84437 Reichertsheim (DE); SINGH, Reeti, 84453 Mühldorf am Inn (DE); KONDÁS, Ján, 84539 Ampfing (DE); MEINICKE, Maximilian, 84431 Rattenkirchen (DE); PICHLMEIER, Sebastian, 84544 Aschau am Inn (DE)
(74) Vertreter: Flach Bauer & Partner Patentanwälte mbB

(57) **Zusammenfassung**

Bei einem Verfahren zur Herstellung einer Bremsscheibe (1) wird eine Reibflächenschicht (10a, 10b) durch Kaltgasspritzen eines Partikelgemischs, das aus 25 bis 75 Gew.-% eines Metallmatrixwerkstoffs und 75 bis 25 Gew.-% eines Karbidwerkstoffs besteht, auf den Grundkörper (2) oder auf eine auf den Grundkörper (2) aufgebrachte Zwischenschicht (12a, 12b) aufgespritzt. Der Metallmatrixwerkstoff besteht aus einer Eisenbasislegierung, Nickelbasislegierung, Titan oder Titanlegierung. Der Karbidwerkstoff besteht aus Wolfram-, Titan-, Eisen-, Silizium-, Chrom- oder Niobkarbid.

## Beschreibung

Die Erfindung betrifft ein Verfahren zur Herstellung einer Bremsscheibe gemäß dem Oberbegriff des Patentanspruchs 1 und eine Bremsscheibe für eine Scheibenbremse gemäß dem Oberbegriff des Patentanspruchs 6.

Bremsscheiben, die für Scheibenbremsen von Fahrzeugen verwendet werden, weisen üblicherweise einen beispielsweise aus Grauguss, Stahlguss oder Aluminiumguss bestehenden Grundkörper mit Seitenflächen auf, die als Reibflächen dienen. Weiterhin ist es auch bekannt, den Grundkörper aus Polymerwerkstoffen oder aus einem Verbundwerkstoff herzustellen.

Bei Scheibenbremsen handelt es sich um Reibungsbremsen. Die Bremswirkung bzw. Verzögerung des Fahrzeugs wird üblicherweise dadurch erreicht, dass Bremsklötze, die mit Bremsbelägen versehen sind, auf mechanische, hydraulische oder pneumatische Weise von gegenüberliegenden Seiten her gegen die Reibflächen der rotierenden Bremsscheibe gedrückt werden. In diesem Fall weist die Bremsscheibe auf beiden Seiten jeweils eine kreisringförmige Reibfläche auf. Ferner werden für Vollscheibenbremsen auch Bremsscheiben verwendet, bei denen die gesamten Seitenflächen der Bremsscheibe als Reibflächen zur Verfügung stehen.

Aufgrund der hohen Reibkräfte und der dadurch bedingten Hitzeentwicklung unterliegen bekannte Bremsscheiben üblicherweise einem hohen Verschleiß. Ein weiteres Problem stellt die Korrosionsanfälligkeit bekannter Bremsscheiben dar.

Weiterhin sind Beschichtungsverfahren verschiedenster Art bekannt, mit denen Werkstücke oder andere Substrate, die beispielsweise aus Metall oder Kunststoff bestehen können, mit bestimmten Werkstoffen beschichtet werden können. Ein derartiges Verfahren ist das Kaltgasspritzverfahren (auch kinetisches Beschichten, Cold Gas Spraying, Cold Spray, Kinetic Metallisation oder Kinetic Fusion genannt). Beim Kaltgasspritzen liegt der Beschichtungswerkstoff in Pulverform vor und wird mit sehr hoher Geschwindigkeit, insbesondere Überschallgeschwindigkeit, auf das Substrat aufgebracht. Hierzu wird ein Prozessgas verwendet, das unter hohem Druck einer Spritzpistole zugeführt und auf Temperaturen aufgeheizt wird, die maximal etwa 1200°C betragen. Die anschließende Expansion des Gases in einer konvergent-divergenten Düse (Laval-Düse) hat zur Folge, dass das Prozessgas auf Überschallgeschwindigkeit beschleunigt und dabei stark abkühlt. Das in die Düse injizierte Spritzpulver wird dabei ebenfalls auf Überschallgeschwindigkeit beschleunigt und verbindet sich aufgrund der hohen kinetischen Energie fest mit dem Substrat. Im Vergleich zu anderen Verfahren wird dabei der Spritzwerkstoff weder an- noch aufgeschmolzen.

Der Erfindung liegt daher die Aufgabe zugrunde, ein Verfahren zur Herstellung einer Bremsscheibe zu schaffen, mit dem auf kostengünstige und zu verlässige Weise eine Bremsscheibe geschaffen werden kann, die besonders gute Eigenschaften hinsichtlich Verschleißfestigkeit sowie Temperatur- und Korrosionsbeständigkeit aufweist. Weiterhin soll eine Bremsscheibe mit derartigen Eigenschaften geschaffen werden.

Diese Aufgabe wird erfindungsgemäß durch ein Verfahren mit den Merkmalen des Anspruchs 1 und eine Bremsscheibe mit den Merkmalen des Anspruchs 6 gelöst. Vorteilhafte Ausführungsformen der Erfindung sind in den weiteren Ansprüchen beschrieben.

Beim erfindungsgemäßen Verfahren wird die Reibflächenschicht durch Kaltgasspritzen eines Partikelgemisches auf den Grundkörper oder auf eine auf den Grundkörper aufgebrachte Zwischenschicht aufgespritzt, wobei das Partikelgemisch aus 25 bis 75 Gew.-% eines Metallmatrixwerkstoffs und aus 75 bis 25 Gew.-% eines Karbidwerkstoffs besteht. Der Metallmatrixwerkstoff besteht aus einem der folgenden Materialien:
- Eisenbasislegierung
- Nickelbasislegierung
- Titan
- Titanlegierung.

Der Karbidwerkstoff besteht aus einem der folgenden Materialien:
- Wolframkarbid,
- Titankarbid,
- Eisenkarbid,
- Siliziumkarbid,
- Chromkarbid,
- Niobkarbid.

Mit Hilfe des erfindungsgemäßen Verfahrens wird eine Reibflächenschicht auf dem Grundkörper oder auf einer auf dem Grundkörper aufgebrachten Zwischenschicht mit einer extrem hohen Verschleißfestigkeit geschaffen. Die Kombination aus Kaltgasspritzverfahren und aufgespritztem Verbundwerkstoff gibt gegenüber bekannten Bremsscheiben eine Verschleißreduktion von bis zu 99%.

Aufgrund der hohen Haftfestigkeit der Reibflächenschicht auf dem Grundkörper bzw. auf der Zwischenschicht wird das Risiko einer Delamination der Reibflächenschicht stark reduziert. Die Reibflächenschicht weist eine sehr hohe Korrosionsbeständigkeit auf. Der Wärmeeintrag durch den Kaltgasspritzprozess in den Grundkörper ist sehr gering, so dass ein Verzug des Grundkörpers minimiert bzw. ausgeschlossen wird. Wird als Metallmatrixwerkstoff eine Eisenbasislegierung, Titan oder eine Titanlegierung verwendet, werden umweltgefährdende Werkstoffe wie beispielsweise Nickel oder Kupfer vermieden. Aufgrund der verbesserten Eigenschaften der Reibflächenschicht ist es möglich, den Grundkörper auch bei sehr leistungsstarken Scheibenbremsen aus einem leichten Material, beispielsweise aus Leichtmetall, zu fertigen, wodurch das Gewicht der Bremsscheibe stark reduziert werden kann. Weiterhin können Bremsscheiben mit Hilfe des erfindungsgemäßen Verfahrens aufgrund des hocheffizienten Kaltgasspritzverfahrens in Kombination mit dem erfindungsgemäßen Partikelgemisch auf sehr kostengünstige Weise hergestellt werden.

Die erfindungsgemäße Reibflächenschicht kann direkt auf den Grundkörper der Bremsscheibe oder auf eine auf dem Grundkörper vorher aufgebrachte Zwischenschicht aufgespritzt werden. Gemäß einer vorteilhaften Ausführungsform wird die Zwischenschicht ebenfalls durch Kaltgasspritzen eines partikelförmigen Metallmatrixwerkstoffs auf den Grundkörper aufgespritzt, wobei der partikelförmige Metallmatrixwerkstoff aus dem der folgenden Materialien besteht:
- Eisenbasislegierung,
- Nickelbasislegierung,
- Titan,
- Titanlegierung.

Die Zwischenschicht kann aus dem gleichen Metallmatrixwerkstoff oder einem anderen Metallmatrixwerkstoff wie der Metallmatrixwerkstoff der Reibflächenschicht bestehen. Beispielsweise ist es möglich, dass der Metallmatrixwerkstoff der Zwischenschicht aus einer Eisenbasislegierung besteht, während der Metallmatrixwerkstoff der Reibflächenschicht, d.h. des Verbundwerkstoffs, aus einer Nickelbasislegierung, Titan oder Titanlegierung besteht. Das Material der Zwischenschicht wird zweckmäßigerweise in Abhängigkeit des Materials des Grundkörpers einerseits und der Reibflächenschicht andererseits derart ausgewählt, dass eine besonders gute Haftung der Schichten untereinander und am Grundkörper erzielt werden.

Gemäß einer vorteilhaften Ausführungsform enthält die Eisenbasislegierung, die für den Metallmatrixwerkstoff der Reibflächenschicht und/oder Zwischenschicht verwendet wird, 5 bis 40 Gew.-% Chrom. Hierdurch können insbesondere günstige Korrosionseigenschaften erzielt werden.

Gemäß einer vorteilhaften Ausführungsform enthält die Titanlegierung, die für den Metallmatrixwerkstoff der Reibflächenschicht und/oder Zwischenschicht verwendet wird, 5,5 bis 6,75 Gew.-% Aluminium und 3,5 bis 4,5 Gew.-% Vanadium. Hierdurch können Reibflächenschichten und Zwischenschichten geschaffen werden, die besonders stabil und hitzebeständig sind.

Gemäß einer vorteilhaften Ausführungsform wird der Grundkörper in einem Bereich, in dem das die Reibflächenschicht bildende Partikelgemisch oder der die Zwischenschicht bildende partikelförmige Metallmatrixwerkstoff aufgespritzt wird, vor dem Aufspritzen mittels Strahlprozesse, mechanisch, chemisch oder mittels eines Lasers aufgeraut. Hierdurch wird eine besonders gute Haftung der Reibflächenschicht oder Zwischenschicht am Grundkörper erzielt.

Die Aufgabe wird weiterhin durch eine Bremsscheibe für eine Scheibenbremse gelöst, wobei die Bremsscheibe einen Grundköper und auf mindestens einer Seite des Grundkörpers eine Reibflächenschicht mit einer Reibfläche aufweist. Die Reibflächenschicht der Bremsscheibe besteht aus einem Verbundmaterial, das durch Kaltgasspritzen eines Partikelgemischs auf den Grundkörper oder auf eine auf den Grundkörper aufgebrachte Zwischenschicht hergestellt ist, wobei das Partikelgemisch aus 25 bis 75 Gew.-% eines Metallmatrixwerkstoffs und 75 bis 25 Gew.-% eines Karbidwerkstoffs besteht. Der Metallmatrixwerkstoff besteht aus einem der folgenden Materialien:
- Eisenbasislegierung
- Nickelbasislegierung
- Titan
- Titanlegierung.

Der Karbidwerkstoff besteht aus einem der folgenden Materialien:
- Wolframkarbid
- Titankarbid
- Eisenkarbid
- Siliziumkarbid
- Chromkarbid
- Niobkarbid.

Mittels der erfindungsgemäßen Bremsscheibe werden dieselben technischen Effekte und Vorteile erzielt, wie vorstehend im Zusammenhang mit dem Verfahren zur Herstellung der Bremsscheibe beschrieben.

Vorzugsweise besteht der Grundkörper ganz oder teilweise aus Stahlguss, Grauguss, Aluminiumguss, Polymer- oder Verbundwerkstoffen.

Die Erfindung wird nachfolgend anhand der Zeichnungen beispielhaft näher erläutert. Es zeigen:
- Figur 1:: eine Schnittdarstellung durch eine Bremsscheibe gemäß einer ersten Ausführungsform der Erfin-dung;
- Figur 2:: die Einzelheit II von Figur 1 in vergrößerter Darstellung; und
- Figur 3:: eine der Figur 2 entsprechende Schnittdarstel-lung einer zweiten Ausführungsform der Erfin-dung.

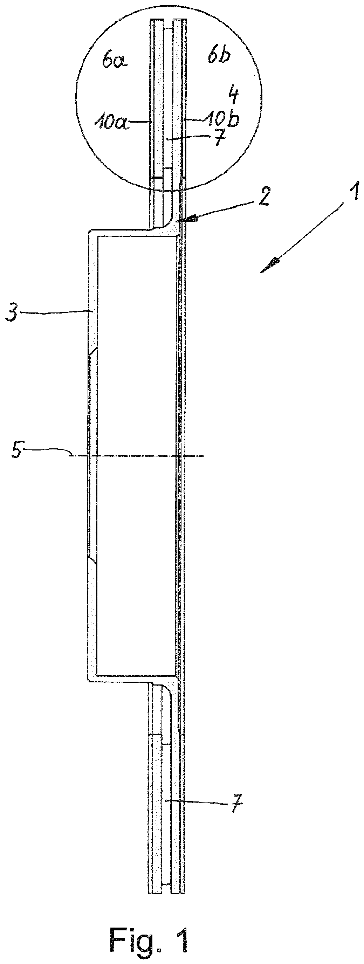

Figur 1 zeigt eine Bremsscheibe 1 für eine Scheibenbremse von Fahrzeugen, beispielsweise Autos, Lastkraftwagen, Motorrädern, Fahrrädern oder Schienenfahrzeugen.

Die Bremsscheibe 1 umfasst einen Grundkörper 2 mit einem im dargestellten Ausführungsbeispiel topfförmigen Zentralteil 3 und einem sich vom Zentralteil 3 radial nach außen erstreckenden, ringförmigen Scheibenkörper 4.

Der Grundkörper 2 ist im dargestellten Ausführungsbeispiel 1 einteilig, kann jedoch auch mehrteilig sein. Bevorzugt besteht der Grundkörper aus Stahlguss, Grauguss, Aluminiumguss, einem Polymer oder Verbundwerkstoff.

Das Zentralteil 3 dient in bekannter Weise zur Befestigung der Bremsscheibe 1 an einem rotierenden Teil, beispielsweise an einer Nabe des Fahrzeugs.

Der sich über das Zentralteil 3 radial hinaus erstreckende ringförmige Scheibenkörper 4 ist in einer Hauptebene angeordnet, die senkrecht zu einer Mittelachse 5 der Bremsscheibe 1 verläuft. Weiterhin besteht im dargestellten Ausführungsbeispiel der Scheibenkörper 4 in bekannter Weise aus zwei parallelen Ringscheibenelementen 6a, 6b, die mittels mehrerer lamellenförmiger, vorzugsweise über den Umfang der Bremsscheibe 1 regelmäßig verteilter Verbindungsstege 7 miteinander verbunden und zueinander auf Abstand gehalten sind, so dass zwischen den Ringscheibenelementen 6a, 6b ein Freiraum geschaffen wird. Hierdurch kann Kühlluft zwischen die Ringscheibenelemente 6a, 6b gelangen, wodurch die Kühlung der Bremsscheibe 1 verbessert wird.

Es ist auch ohne weiteres möglich, Vollscheiben mittels des erfindungsgemäßen Verfahrens zu beschichten.

Auf beiden Seiten des Scheibenkörpers 4, d.h. an den äußeren Seitenflächen 9a, 9b, ist jeweils eine Reibflächenschicht 10a, 10b mittels eines Kaltgasspritzverfahrens aufgebracht. Die beiden Reibflächenschichten 10a, 10b sind vorzugsweise gleich ausgebildet und können insbesondere aus dem gleichen Material bestehen und die gleiche Dicke aufweisen. Die seitlich außen liegenden Flächen der Reibflächenschichten 10a, 10b bilden Reibflächen 11a, 11b. Im dargestellten Ausführungsbeispiel sind die Reibflächenschichten 10a, 10b derart ausgebildet, dass nicht dargestellte Bremsklötze, die an einen relativ zum Fahrzeug stationären Bremssattel aufeinander zu und voneinander wegbewegt werden können und geeignete Bremsbeläge aufweisen, von gegenüberliegenden Seiten her gegen die Reibflächen 11a, 11b der Reibflächenschichten 10a, 10b gepresst werden können, wodurch die durch das Bremsen erforderlichen Reibkräfte zwischen den Bremsklötzen und dem Scheibenkörper 4 erzeugt werden.

Die Reibflächenschichten 10a, 10b bestehen aus einem Verbundmaterial, das aus einem Metallmatrixwerkstoff und einem Karbidwerkstoff besteht. Erfindungsgemäß besteht der Metallmatrixwerkstoff aus einer Eisenbasislegierung mit vorzugsweise 5 bis 40 Gew.-% Chrom (mit oder ohne zusätzlicher Legierungsbestandteile), Nickelbasislegierung, Titan oder einer Titanlegierung, beispielsweise Ti6Al4V mit 5,5 bis 6,75% Aluminium und 3,5% Vanadium.

Der Karbidwerkstoff besteht aus Wolframkarbid, Titankarbid, Eisenkarbid, Siliziumkarbid, Chromkarbid oder Niobkarbid.

Der Verbundwerkstoff der Reibflächenschichten 10a, 10b wird durch Aufspritzen eines Pulver- bzw. Partikelgemischs erzeugt, das aus 25 bis 75 Gew.-% Metallmatrixwerkstoff und 75 bis 25 Gew.-% Karbidwerkstoff besteht.

Eine besonders gute Haftung der Reibflächenschichten 10a, 10b am Scheibenkörper 4 kann dadurch erzeugt werden, dass die Seitenflächen 9a, 9b des Scheibenkörpers 4 vor dem Beschichten in geeigneter Weise vorbereitet werden. Insbesondere können Verfahren verwendet werden, mit denen die Seitenflächen 9a, 9b aufgeraut werden. Dies kann durch Strahlprozesse, mechanisches Aufrauen, chemische Vorbereitung, Laserstrukturieren etc. erfolgen.

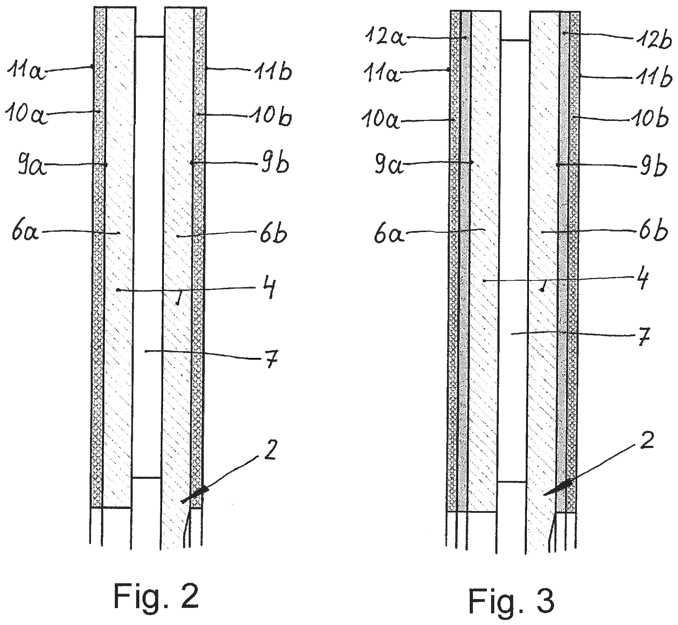

Figur 3 zeigt eine zweite Ausführungsform der Erfindung, wobei lediglich derjenige Abschnitt einer Bremsscheibe gezeigt ist, der im Zusammenhang mit der ersten Ausführungsform in Figur 2 gezeigt ist. Der Grundkörper 2 ist bei der zweiten Ausführungsform identisch zum Grundkörper 2 der ersten Ausführungsform, so dass diesbezüglich auf die erste Ausführungsform verwiesen wird.

Im Unterschied zur ersten Ausführungsform sind bei der zweiten Ausführungsform die Reibflächenschichten 10a, 10b nicht direkt auf den Scheibenkörper 4 des Grundkörpers 2 aufgespritzt, sondern auf Zwischenschichten 12a, 12b, die vor dem Aufspritzen der Reibflächenschichten 10a, 10b ebenfalls mittels des Kaltgasspritzverfahrens auf die Seitenflächen 9a, 9b des Scheibenkörpers 4 aufgespritzt werden.

Die beiden Zwischenschichten 12a, 12b können gleich ausgebildet sein. Weiterhin bestehen die Zwischenschichten 12a, 12b aus einem Metallmatrixwerkstoff, der aus einer Eisenbasislegierung (vorzugsweise mit 5 bis 40 % Chrom), Nickelbasislegierung, Titan oder Titanlegierung (beispielsweise Ti6Al4V mit 5,5 bis 6,76 % Aluminium und 3,5 bis 5,5 % Vanadium) besteht.

Der Metallmatrixwerkstoff der Zwischenschichten 12a, 12b kann aus dem gleichen oder einem anderen Metallmatrixwerkstoff wie derjenige der Reibflächenschichten 10a, 10b bestehen.

Auch bei der zweiten Ausführungsform kann es zweckmäßig sein, dass vor dem Aufspritzen der Zwischenschichten 12a, 12b die Seitenflächen 9a, 9b des Scheibenkörpers 4 in geeigneter Weise vorbehandelt, insbesondere aufgeraut, werden. Dies kann mittels der gleichen Verfahren erfolgen, wie im Zusammenhang mit der ersten Ausführungsform beschrieben.

## Patentansprüche

1. Verfahren zur Herstellung einer Bremsscheibe (1), die einen Grundkörper (2) und auf mindestens einer Seite des Grundkörpers (2) eine Reibflächenschicht (10a, 10b) mit einer Reibfläche (11a, 11b) aufweist, **dadurch gekennzeichnet, dass** die Reibflächenschicht (10a, 10b) durch Kaltgasspritzen eines Partikelgemischs auf den Grundkörper (2) oder auf eine auf den Grundkörper (2) aufgebrachte Zwischenschicht (12a, 12b) aufgespritzt wird, wobei das Partikelgemisch aus 25 bis 75 Gew.-% eines Metallmatrixwerkstoffs und 75 bis 25 Gew.-% eines Karbidwerkstoffs besteht, wobei der Metallmatrixwerkstoff aus einem der folgenden Materialien besteht:
- Eisenbasislegierung
- Nickelbasislegierung
- Titan
- Titanlegierung,
und wobei der Karbidwerkstoff aus einem der folgenden Materialien besteht:
- Wolframkarbid
- Titankarbid
- Eisenkarbid
- Siliziumkarbid
- Chromkarbid
- Niobkarbid.

2. Verfahren nach Anspruch 1, **dadurch gekennzeichnet, dass** die Zwischenschicht (12a, 12b) durch Kaltgasspritzen eines partikelförmigen Metallmatrixwerkstoffs auf den Grundkörper (2) aufgespritzt wird, wobei der partikelförmige Metallmatrixwerkstoff aus einem der folgenden Materialien besteht:
- Eisenbasislegierung
- Nickelbasislegierung
- Titan
- Titanlegierung.

3. Verfahren nach Anspruch 1 oder 2, **dadurch gekennzeichnet, dass** die Eisenbasislegierung 5 bis 40 Gew.-% Chrom enthält.

4. Verfahren nach einem der vorhergehenden Ansprüche, **dadurch gekennzeichnet, dass** die Titanlegierung 5,5 bis 6,75 Gew.-% Aluminium und 3,5 bis 4,5 Gew.-% Vanadium enthält.

5. Verfahren nach einem der vorhergehenden Ansprüche, **dadurch gekennzeichnet, dass** der Grundkörper (2) in einem Bereich, in dem das die Reibflächenschicht (10a, 10b) bildende Partikelgemisch oder der die Zwischenschicht (12a, 12b) bildende partikelförmige Metallmatrixwerkstoff aufgespritzt wird, vor dem Aufspritzen mechanisch, chemisch oder mittels eines Lasers aufgeraut wird.

6. Bremsscheibe für eine Scheibenbremse, wobei die Bremsscheibe (1) einen Grundkörper (2) und auf mindestens einer Seite des Grundkörpers (2) eine Reibflächenschicht (10a, 10b) mit einer Reibfläche (11a, 11b) aufweist, **dadurch gekennzeichnet, dass** die Reibflächenschicht (10a, 10b) aus einem Verbundmaterial besteht, das durch Kaltgasspritzen eines Partikelgemischs auf den Grundkörper (2) oder auf eine auf den Grundkörper (2) aufgebrachte Zwischenschicht (12a, 12b) hergestellt ist, wobei das Partikelgemisch aus 25 bis 75 Gew.-% eines Metallmatrixwerkstoffs und 75 bis 25 Gew.-% eines Karbidwerkstoffs besteht,
wobei der Metallmatrixwerkstoff aus einem der folgenden Materialien besteht:
- Eisenbasislegierung
- Nickelbasislegierung
- Titan
- Titanlegierung,
und wobei der Karbidwerkstoff aus einem der folgenden Materialien besteht:
- Wolframkarbid,
- Titankarbid,
- Eisenkarbid,
- Siliziumkarbid,
- Chromkarbid,
- Niobkarbid.

7. Bremsscheibe nach Anspruch 6, **dadurch gekennzeichnet, dass** die Zwischenschicht (12a, 12b) zumindest überwiegend aus einem durch Kaltgasspritzen auf den Grundkörper (2) aufgespritzten partikelförmigen Metallmatrixwerkstoff besteht, der aus einem der folgenden Materialien besteht:
- Eisenbasislegierung
- Nickelbasislegierung
- Titan
- Titanlegierung.

8. Bremsscheibe nach Anspruch 6 oder 7, **dadurch gekennzeichnet, dass** die Eisenbasislegierung 5 bis 40 Gew.-% Chrom enthält.

9. Bremsscheibe nach einem der Ansprüche 6 bis 8, **dadurch gekennzeichnet, dass** die Titanlegierung 5,5 bis 6,75 Gew.-% Aluminium und 3,5 bis 4,5 Gew.-% Vanadium enhält.

10. Bremsscheibe nach einem der Ansprüche 6 bis 9, **dadurch gekennzeichnet, dass** der Grundkörper (2) in einem Bereich, in dem das die Reibflächenschicht (10a, 10b) bildende Partikelgemisch oder der die Zwischenschicht (12a, 12b) bildende partikelförmige Metallmatrixwerkstoff aufgespritzt wird, mechanisch, chemisch oder mittels eines Lasers aufgeraut ist.

11. Bremsscheibe nach einem der Ansprüche 6 bis 10, **dadurch gekennzeichnet, dass** der Grundkörper (2) ganz oder teilweise aus Stahlguss, Grauguss, Aluminiumguss, Polymer oder Verbundwerkstoffen besteht.
